Europäisches Patentamt

European Patent Office

Office européen des brevets

(19)

(11) Numéro de publication : **0 050 532 B1**

# FASCICULE DE BREVET EUROPÉEN

(45) Date de publication du fascicule du brevet :
05.10.83

(51) Int. Cl.³ : **C 02 F  3/18**

(21) Numéro de dépôt : **81401227.4**

(22) Date de dépôt : **28.07.81**

(54) **Aérateur à axe horizontal, pour l'épuration des eaux usées.**

(30) Priorité : **22.09.80 FR 8020303**

(43) Date de publication de la demande :
**28.04.82 Bulletin 82/17**

(45) Mention de la délivrance du brevet :
**05.10.83 Bulletin 83/40**

(84) Etats contractants désignés :
**BE CH DE GB IT LI NL**

(56) Documents cités :
**CH A 481 674**
**FR A 2 130 820**
**US A 3 799 515**

(73) Titulaire : **"DEGREMONT" Société dite:**
**183, Avenue du 18 Juin 1940**
**F-92508 Ruell-Maimalson Cédex (FR)**

(72) Inventeur : **Bernard, Jacques**
**5 boulevard Victor Hugo**
**F-78100 Saint-Germain-en-Laye (FR)**
Inventeur : **Durot, Jean**
**18 rue Francine**
**F-78450 Villepreux (FR)**

(74) Mandataire : **Armengaud, Charles**
**Cabinet ARMENGAUD AINE 3, Avenue Bugeaud**
**F-75116 Paris (FR)**

EP 0 050 532 B1

### Aérateur à axe horizontal, pour l'épuration des eaux usées

La présente invention concerne un aérateur à axe horizontal utilisable notamment pour l'épuration des eaux usées.

L'épuration biologique des eaux usées chargées de pollution organique nécessite l'introduction d'oxygène dans l'eau pour assurer la respiration et l'action épuratrice de la masse bactérienne contenue dans cette eau. L'introduction dans l'eau de l'oxygène de l'air surmontant la surface libre de l'eau à traiter et sa dissolution sont accélérées si l'on dispose, au voisinage du niveau liquide, un appareil qui, par son action mécanique, provoque l'augmentation des surfaces de contact liquide/gaz.

On connaît depuis longtemps de nombreux appareils basés sur ce principe, qui sont dénommés aérateurs mécaniques ; les uns, à axe vertical (appelés aussi turbines d'aération), sont généralement utilisés dans des bassins profonds de 2,50 m à 6 m ; les autres, à axe horizontal sont généralement utilisés dans des bassins de plus faible profondeur, de 1,3 m à 4 m construits sous forme de canal en boucle fermée. Ils sont constitués par un moyeu à axe horizontal muni d'éléments comportant une multiplicité de pales.

Ces appareils utilisés pour l'épuration des eaux résiduaires, doivent assurer à la fois une fonction d'oxygénation et une fonction de brassage et d'homogénéisation du contenu du bassin. En effet, pour réaliser un contact efficace entre micro-organismes et éléments polluants il est indispensable que, simultanément à l'oxygénation, soit assuré le maintien en suspension de toutes les particules contenues dans la liqueur.

Dans le cas des bassins construits sous forme de boucle fermée, le brassage est obtenu en assurant une vitesse de circulation horizontale suffisante du liquide. Pour des raisons d'économie d'investissement, on assure généralement les deux fonctions d'oxygénation et de brassage au moyen d'un seul type d'aérateur à axe horizontal disposé en travers d'une ou des branches de la boucle.

Or, si les besoins de mise en suspension et de brassage sont sensiblement constants, par contre les quantités d'oxygène à introduire par unité de volume de liqueur du réacteur biologique peuvent varier dans de très grandes limites.

Les besoins d'oxygénation varient en effet d'une installation à l'autre et, sur une même installation, d'une heure à l'autre de la journée :

Ainsi sur les stations d'épuration dites à « forte charge », pour lesquelles la quantité de pollution, exprimée par exemple en poids journalier de $DBO_5$, apportée par unité de volume de bassin est élevée, les besoins d'oxygénation sont nettement plus importants par unité de volume de bassin que sur les stations à faible charge, comme le sont par exemple celles dites à « aération prolongée » assurant en outre, éventuellement la nitrification de l'azote ammoniacal et organique contenu dans l'effluent brut.

D'autre part, durant une même journée, le flux horaire de pollution, exprimé par exemple en poids horaire de $DBO_5$ appliquée, arrivant à l'entrée du réacteur biologique de la station d'épuration d'une collectivité, peut varier dans de très grandes limites. Il est fréquemment 10 à 20 fois plus fort durant certaines heures de pointe de jour par rapport aux heures creuses de nuit. Les besoins d'oxygénation varient donc dans de très grandes limites tout au long de la journée.

Il est donc intéressant de disposer d'aérateurs dont la capacité de brassage, c'est-à-dire de « pompage » est élevée même pour des régimes de fonctionnement ne conduisant qu'à un faible apport d'oxygène. On évite ainsi de maintenir en service des aérateurs pour des raisons simplement hydrauliques alors que les besoins en oxygène de la masse bactérienne ne le nécessitent pas.

Jusqu'à ce jour, on a cherché principalement à améliorer l'apport spécifique d'oxygénation qui se traduit par le rapport :

$$\frac{\text{poids de } O_2 \text{ introduit}}{\text{énergie consommée}}$$

des aérateurs à axe horizontal en divisant la quantité d'eau déplacée par l'action de l'appareil et en facilitant l'introduction d'air dans le liquide, dès la mise en contact de l'aérateur avec le liquide, c'est-à-dire en amont de l'aérateur. Le dessin des pales équipant la plupart des aérateurs à axe horizontal est établi dans ce double but : le nombre de pales est très important (plusieurs dizaines par mètre d'appareil), leur forme comporte des angles vifs nombreux, leur largeur est souvent plus importante à la périphérie qu'à la zone d'attache sur le moyeu, leur surface unitaire est faible, de l'ordre du $dm^2$, et elles sont le plus souvent placées dans des plans méridiens passant par l'axe de l'aérateur.

Cependant ces appareils connus présentent de nombreux inconvénients : leur capacité de pompage est réduite ; ils consomment souvent, pour assurer le brassage minimal, une puissance que les besoins d'oxygénation ne nécessitent pas et cela avec le risque de suroxygéner la liqueur de boues activées.

Les faibles dimensions des pales dont ils sont munis, font qu'une part importante du volume d'eau déplacée par chacune d'entre elles, s'échappe sur ses bords latéraux et est reprise par les pales suivantes. L'efficacité réelle du pompage, destinée à assurer à la fois la circulation dans le canal et le renouvellement des veines liquides les plus pauvres en oxygène, est ainsi médiocre.

En aval de l'appareil, l'eau déplacée par les pales est soulevée et projetée inutilement trop haut au-dessus de la surface liquide, avec des dépenses d'énergie superflues. Une partie, souvent non négligeable, du débit est d'ailleurs recyclée vers l'amont de l'aérateur sous l'action des pales à leur sortie de l'eau, combinée à l'effet centrifuge. Ce débit recyclé diminue la capacité réelle de pompage de l'aérateur ; en outre, il présente déjà une teneur élevée en oxygène dissous défavorable à un apport d'oxygène important depuis l'atmosphère.

Enfin, la fixation, sur le moyeu, d'une multiplicité de pales de faibles dimensions et présentant des rapports hauteur/largeur élevés, de l'ordre de 2 à 5, est délicate et la résistance de ces pales aux efforts répétés de flexion est limitée.

La présente invention a pour but de remédier à ces inconvénients et se propose de réaliser un aérateur à axe horizontal présentant une forte capacité de brassage et dont le bilan énergétique d'utilisation est plus favorable que celui des aérateurs existants. L'invention permet également d'accroître très sensiblement la résistance mécanique et la fiabilité de ce type d'équipement installé dans des conditions de service toujours très sévères : installations en plein air, liquide chargé de matières en suspension volumineuses, fibreuses, plus ou moins dures, entretien sommaire.

La présente invention consiste en un aérateur du type à axe horizontal constitué d'un cylindre creux équipé de pales rigides, et entraîné en rotation, caractérisé en ce que ledit cylindre comporte deux séries de pales parallèles et opposées, disposées sur la surface externe du cylindre suivant un tracé non rectiligne et se recoupant, de façon à donner aux pales une longueur d'au moins 0,50 m et d'avoir une longueur immergée de pales constante pour un plan d'eau déterminé.

Suivant une caractéristique de l'invention le diamètre D du cylindre et le diamètre extérieur D' du cylindre équipé de ses pales sont tels que D'−D est inférieur à 0,4 D'.

Dans une forme de réalisation préférée de l'invention, chaque série de pales est constituée d'éléments, continus ou non, suivant des lignes d'attache hélicoïdales. Ces lignes d'attache font, avec les génératrices du cylindre, un angle constant, avantageusement compris entre 5 et 20°.

Suivant une autre caractéristique de l'invention, les pales sont inclinées dans une direction inverse du sens de rotation du cylindre, cette disposition facilitant le déplacement d'une grande quantité d'eau de l'amont vers l'aval de l'appareil et évitant la formation de dépôts dans l'enceinte où est placé l'appareil.

Les divers caractéristiques et avantages de l'invention ressortiront de la description, qui va suivre, d'une de ses formes possibles de réalisation. Il est bien précisé qu'il s'agit uniquement d'un exemple et que toutes autres formes, proportions et dispositions pourraient être adoptées sans sortir du cadre de l'invention.

Au cours de cette description, on se réfère aux dessins ci-joints sur lesquels :

La figure 1 représente une vue extérieure de l'aérateur.

La figure 2 représente une vue développée de la surface externe de l'aérateur.

La figure 3 représente une coupe transversale de l'aérateur monté sur un canal.

L'aérateur suivant l'invention est constitué par un moyeu 1 de forme cylindrique, de diamètre D et de longueur L, fermé à ses extrémités par deux flasques pleins 2. Ce moyeu comporte à ses extrémités deux bouts d'arbre 3 destinés à reposer sur deux paliers supports non représentés, fixés soit sur les berges latérales du canal ou du bassin dans lequel se trouve l'eau à traiter, soit à un ensemble constitué d'une passerelle enjambant le canal, et mis en rotation de façon connue par un ensemble d'entraînement.

Sur le cylindre sont fixées, suivant un tracé hélicoïdal deux séries opposées de pales parallèles 4, de grande longueur développée 1 comprise entre 0,5 et 1,50 m ; l'ensemble constitué par le cylindre muni de ses pales a un diamètre D' tel que D'−D est inférieur à 0,4 D'. Les lignes d'attache de ces pales font avec les génératrices du cylindre 1 un angle $\alpha$ constant, compris entre 5 et 20°.

La disposition adoptée conformément à l'invention permet d'avoir des pales de longueur d'au moins 0,50 m provoquant, sans variation de puissance, le pompage de grandes quantités d'eau d'amont en aval du cylindre, l'aération de l'eau étant réalisée essentiellement en aval du cylindre.

Cette disposition permet en outre à la surface immergée de pales d'être constante, pour un plan d'eau déterminé, avantage important que ne présentent pas la plupart des appareils connus.

La profondeur d'immersion des pales est avantageusement comprise entre D'−D/3 et D'−D.

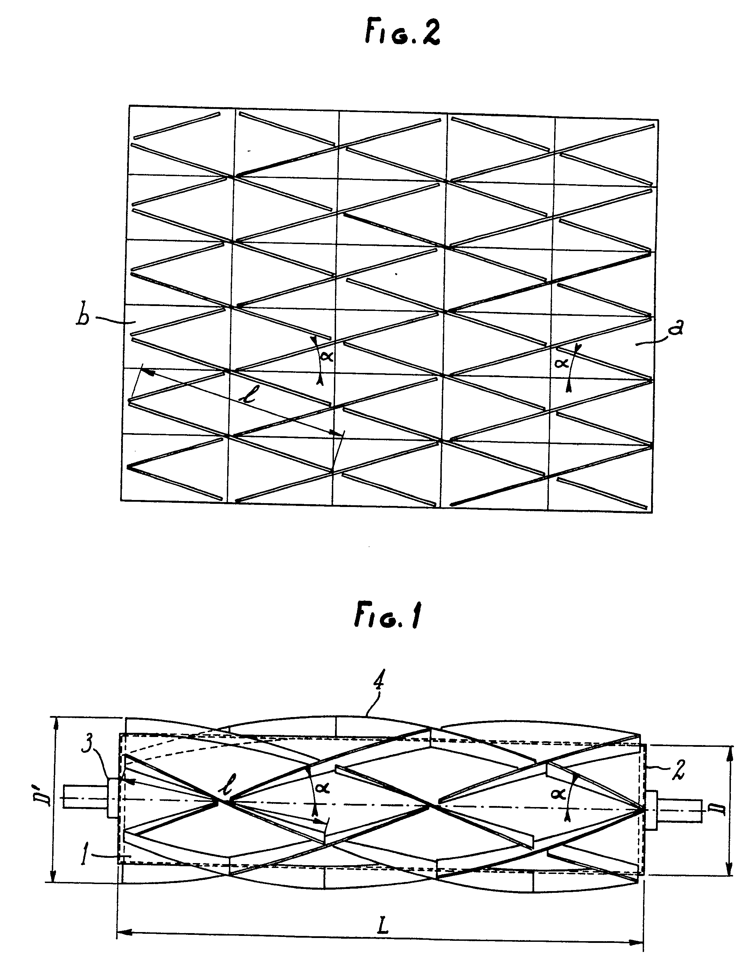

La figure 2 montre une vue développée de la surface externe de l'aérateur, sur laquelle ressort la disposition en losange formée par les deux séries de pales hélicoïdales parallèles et opposées, divisant la périphérie du cylindre en n parts égales (6 dans l'exemple traité).

Ces parts sont espacées les unes des autres à intervalles réguliers de 150 à 450 mm, le diamètre D du cylindre étant compris entre 600 et 1 000 mm. Les pales sont fixées au cylindre de façon définitive par soudure par exemple, ou sont démontables.

Le cylindre est rigide et exécuté en métal ou en matière plastique ; les pales sont rigides ou semi-rigides et exécutées en métal, matière plastique ou élastomère.

La longueur du cylindre peut atteindre 10 mètres.

Les zones latérales a, b de la surface du cylindre sont éventuellement, l'une et/ou l'autre, munies de pales disposées dans un sens ou dans l'autre, suivant la correction que l'on désire apporter aux inégalités de circulation de l'eau dans le bassin, dues aux courbes du canal : en effet, suivant que la partie a ou b est munie ou non de pales, on favorise une orientation du flot vers l'une ou l'autre berge du canal.

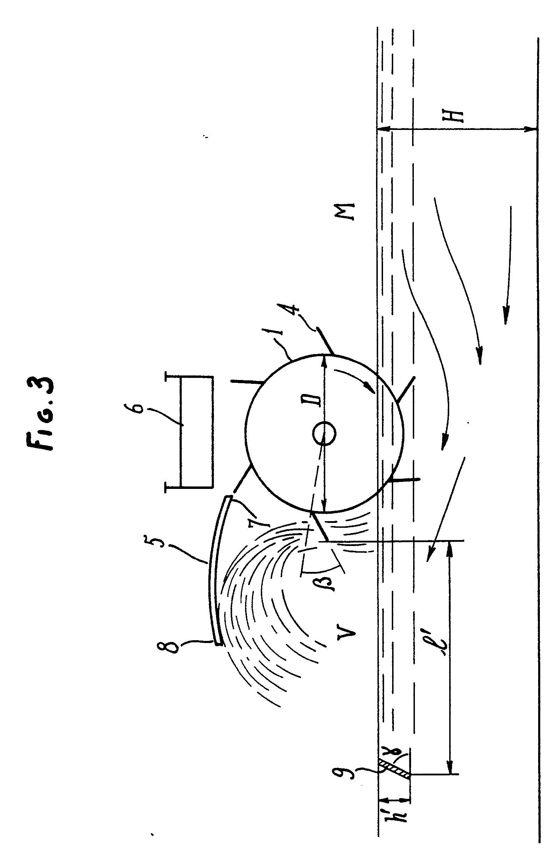

En référence à la figure 3, l'aérateur suivant l'invention est monté sur un canal, le cylindre 1

étant mis en rotation dans le sens indiqué par la flèche, l'eau à traiter circulant d'amont M en aval V de l'aérateur. La ligne de plus grande pente des pales 4 fait avec le rayon du cylindre un angle β de 30 à 60°, de préférence de 45°, compté dans le sens inverse de rotation du cylindre. En tournant dans le sens indiqué par la flèche avec une vitesse périphérique à l'extrémité des pales de 2 à 5 m/sec, et de préférence de 3 à 4 m/sec ; les pales entraînent une grande quantité d'eau de l'amont à l'aval de l'aérateur, une partie importante du volume d'eau déplacé étant projetée au-dessus du plan d'eau à l'aval du cylindre et ainsi aéré. Un capot déflecteur 5 disposé au-dessus du cylindre permet de ramener vers l'aval l'eau entraînée par les pales qui ne sont plus immergées, cette eau réduisant la capacité de pompage de l'aérateur. Le capot déflecteur est avantageusement fixé à la passerelle 6. La partie amont 7 de ce capot est disposée au voisinage immédiat de l'extrémité des pales, près de leur position la plus haute ; la partie aval 8 s'écarte de l'aérateur. L'eau soulevée par les pales au-dessus du plan d'eau vient ricocher contre ce déflecteur et se divise en gouttelettes.

A puissance consommée et à surface totale de pales égales, ces dispositions assurent un débit de transit à travers l'aérateur ainsi qu'un effet de pompage et de circulation dans le canal, plus importants que les dispositions connues. En effet, l'eau entraînée par les pales est ainsi renvoyée vers l'aval et l'on évite le retour en amont d'une eau déjà oxygénée.

On a constaté que l'augmentation très sensible du débit circulé au détriment de l'intensité de la dispersion du liquide dans l'atmosphère permet néanmoins d'obtenir des apports spécifiques d'oxygénation (kg $O_2$ introduits par Kwh consommé) équivalents à ceux obtenus par les meilleurs aérateurs à axe horizontal existants. On réalise ainsi une économie d'énergie pendant les périodes de fonctionnement à besoins d'oxygénation réduits où les dépenses énergétiques à des fins de brassage sont prépondérantes ; ce bon rendement énergétique de pompage étant favorisé par l'inclinaison à 45° des pales dans le sens inverse de rotation du cylindre.

A la sortie des pales de l'eau, la résultante des 2 composantes de la vitesse de l'eau — vitesse de déplacement de la pale et vitesse relative de l'eau sur la pale — se rapproche de l'horizontale et facilite le déplacement d'une grande quantité d'eau de l'amont vers l'aval. Cette inclinaison des pales dans le sens inverse de rotation du cylindre permet en outre d'orienter, en amont de l'aérateur, les filets liquides vers le fond du canal, et d'éviter ainsi le ralentissement des vitesses sur le fond du canal et donc la formation de dépôts et le développement de fermentations très nuisibles à l'activité des boues biologiques.

En outre, l'inclinaison des pales dans le sens inverse de rotation du cylindre ainsi que leur montage suivant des lignes d'attache faisant un certain angle avec les génératrices du moyeu réduisent les résistances des pales à leur entrée dans l'eau. Du fait des faibles turbulences dans la zone amont de l'aérateur, et des faibles dépressions à l'arrière des pales, les quantités de bulles d'air entraînées dans le liquide, en amont de l'aération, sont nettement plus faibles que dans les aérateurs à axe horizontal existants à très grand nombre de pales de faibles dimensions. Mais cet inconvénient est largement compensé par le meilleur rendement hydraulique de l'appareil et par une nette augmentation du débit pour une puissance donnée, augmentation de débit favorable au rendement global énergétique de l'aérateur.

Un guide-eau (9) de hauteur projetée h' et incliné d'un angle γ sur l'horizontale est avantageusement disposé à l'aval du cylindre, sur toute la largeur du canal de profondeur H à une distance horizontale l' du bord extérieur des pales ; sa partie supérieure affleurant la surface libre de l'eau dans le canal ; il est tel que 0,10 H < h' < 0,3 H, $V^2/2\,g$ < l' < $2,5\,V^2/2\,g$,
V étant la vitesse périphérique à l'extrémité des pales en m/sec, g = 9,81 m/sec$^2$ et 40° < γ < 60°.

Ce guide-eau permet d'accroître l'entraînement des bulles d'air dans les couches plus profondes du canal et donc l'apport spécifique d'oxygène.

**Revendications**

1. Aérateur à axe horizontal, pour l'épuration des eaux usées, constitué d'un cylindre creux équipé de pales rigides et entraîné en rotation, caractérisé en ce que ledit cylindre comporte deux séries de pales (4) parallèles et opposées, disposées sur la surface externe du cylindre (1) suivant un tracé non rectiligne et se recoupant, de façon à donner aux pales une longueur d'au moins 0,50 m et d'avoir une longueur immergée de pales constante pour un plan d'eau déterminé.

2. Aérateur à axe horizontal suivant la revendication 1, caractérisé en ce que le diamètre D du cylindre et le diamètre extérieur D' du cylindre équipé de ses pales sont tels que D'−D est inférieur à 0,4 D'.

3. Aérateur à axe horizontal suivant l'une quelconque des revendications précédentes, caractérisé en ce que chaque série de pales (4) est constituée d'éléments, continus ou non, disposés sur la surface externe du cylindre suivant des lignes d'attache hélicoïdales.

4. Aérateur à axe horizontal suivant l'une quelconque des revendications précédentes, caractérisé en ce que les lignes d'attache des pales font, avec les génératrices du cylindre, un angle constant, (α) avantageusement compris entre 5 et 20°.

5. Aérateur à axe horizontal suivant l'une quelconque des revendications précédentes, caractérisé en ce que les pales sont inclinées dans une direction inverse du sens de rotation du cylindre.

6. Aérateur à axe horizontal suivant l'une quelconque des revendications précédentes, caractérisé en ce que les pales fixées sur la face externe du cylindre ont une ligne de plus grande pente faisant avec le rayon dudit cylindre, un angle constant (β) compris entre 30 et 60°, compté dans le sens inverse de celui de la rotation du cylindre.

7. Aérateur à axe horizontal suivant l'une quelconque des revendications précédentes, caractérisé en ce que le diamètre du cylindre est compris entre 600 et 900 mm et sa longueur est inférieure ou égale à 10 m.

8. Aérateur à axe horizontal suivant l'une quelconque des revendications précédentes, caractérisé en ce que les pales fixées sur la face externe du cylindre divisent la périphérie dudit cylindre en n parties égales variant de 6 à 12.

9. Aérateur à axe horizontal suivant l'une quelconque des revendications précédentes, caractérisé en ce qu'il comporte un capot déflecteur (5) disposé au-dessus du cylindre, destiné à ramener vers l'aval l'eau entraînée par les pales.

10. Aérateur à axe horizontal suivant l'une quelconque des revendications précédentes, caractérisé en ce que la profondeur d'immersion de pales est comprise entre D'−D/3 et D'−D.


## Claims

1. Horizontal-axis aerator for purification of waste water, formed by a hollow cylinder equipped with rigid blades and caused to rotate, characterized in that the said cylinder comprises two series of parallel and opposite blades (4), positioned on the external surface of the cylinder (1) according a not rectilinear pattern and intersecting each other, so as to give to blades a length at least 0,50 m and to have a constant immersed length of the blades for a determined water level.

2. Horizontal-axis aerator as claimed in claim 1, characterized in that the diameter D of the cylinder and the external diameter D' of the cylinder equipped with its blades are such that D'−D < 0,4 D'.

3. Horizontal-axis aerator of any preceding claims, characterized in that each serie of blades is formed with elements unbroken or broken, positioned on the external surface of the cylinder in the direction of helicoidal connection lines.

4. Horizontal-axis aerator of any preceding claims, characterized in that the connection lines of the blades make, with the generatricies of the cylinder, a constant angle (α), advantageously from 5 to 20°.

5. Horizontal-axis aerator of any preceding claims, characterized in that the connection lines of the blades are inclined in a direction opposite to the direction of rotation of the cylinder.

6. Horizontal-axis aerator of any preceding claims, characterized in that the blades mounted on the external side of the cylinder have a line of greatest slope forming with a radius of said cylinder a constant angle (β) of from 30 to 60°, computed in the direction opposite to the direction of rotation of cylinder.

7. Horizontal-axis aerator of any preceding claims, characterized in that the diameter of cylinder is from 600 to 900 mm, and the length of said cylinder is less than or equal to 10 m.

8. Horizontal-axis aerator of any preceding claims, characterized in that the blades divide the periphery of said surface of said cylinder into from 6 to 12 equal sized surface sections.

9. Horizontal-axis aerator of any preceding claims, characterized in that further comprising deflector hood means, positioned at a location above an area downstream of said aerator, for deflecting downstream of said aerator waste water driven upwardly form the surface of said body of waste water by said blades.

10. Horizontal-axis aerator of any preceding claims, characterized in that the immersion depth of said blades is from D'−D/3 to D'−D, wherein D equals the diameter of said cylinder, and D' equals the diameter of said aerator including said cylinder and said blades.


## Ansprüche

1. Rohrbelüfter mit horizontaler Achse zur Reinigung von Abwässern, welcher aus einem Hohlzylinder mit steifen und in Drehung versetzbaren Blättern besteht, dadurch gekennzeichnet, daß der Zylinder zwei Reihen paralleler und einander gegenüber liegender Blätter (4) aufweist, welche auf der Außenfläche des Zylinders (1) entlang einer nicht-geradlinigen und sich wieder schneidenden Linie so angeordnet sind, daß die Blätter eine Länge von mindestens 0,50 m aufweisen und daß sich bei einem vorgegebenen Wasserspiegel eine gleichbleibende Eintauchlänge Ergibt.

2. Rohrbelüfter mit horizontaler Achse nach Anspruch 1, dadurch gekennzeichnet, daß der Durchmesser (D) des Zylinders und der Außendurchmesser (D') des mit den zugehörigen Blättern versehenen Zylinders so gehalten ist, daß die Differenz D'−D kleiner als 0,4 D' ist.

3. Rohrbelüfter mit horizontaler Achse nach einem der vorhergehenden Ansprüche, dadurch gekennzeichnet, daß jede Reihe von Blättern aus durchgehenden bzw. unterbrochenen Elementen besteht, welche auf der Außenfläche des Zylinders entlang schraubenlinienförmigen Befestigungslinien angebracht sind.

4. Rohrbelüfter mit horizontaler Achse nach einem der vorhergehenden Ansprüche, dadurch gekennzeichnet, daß die Befestigungslinien der Blätter mit den Mantellinien des Zylinders einen gleichbleibenden Winkel (α) bilden, der vorteilhafterweise zwischen 5° und 20° beträgt.

5. Rohrbelüfter mit horizontaler Achse nach einem der vorhergehenden Ansprüche, dadurch gekennzeichnet, daß die Blätter in einer zur Drehrichtung des Zylinders umgekehrten Richtung geneigt sind.

6. Rohrbelüfter mit horizontaler Achse nach einem der vorhergehenden Ansprüche, dadurch gekennzeichnet, daß die auf der Außenfläche des Zylinders befestigten Blätter eine viel stärker geneigte Linie aufweisen, die mit dem Radius des Zylinders einen gleichbleibenden Winkel (β) zwischen 30° und 60° einschließt, gemessen in der zur Drehrichtung des Zylinders entgegengesetzten Richtung.

7. Rohrbelüfter mit horizontaler Achse nach einem der vorhergehenden Ansprüche, dadurch gekennzeichnet, daß der Durchmesser des Zylinders zwischen 600 und 900 mm beträgt und daß seine Länge kleiner als oder gleich 10 m ist.

8. Rohrbelüfter mit horizontaler Achse nach einem der vorhergehenden Ansprüche, dadurch gekennzeichnet, daß die auf der Außenfläche des Zylinders befestigten Blätter den Umfang des Zylinders in n gleiche Teile unterteilen, die zwischen 6 und 12 schwanken.

9. Rohrbelüfter mit horizontaler Achse nach einem der vorhergehenden Ansprüche, dadurch gekennzeichnet, daß eine Leitplatte (5) oberhalb des Zylinders vorgesehen ist, welche das von den Blättern bewegte Wasser in Stromabwärtsrichtung bringen.

10. Rohrbelüfter mit horizontaler Achse nach einem der vorhergehenden Ansprüche, dadurch gekennzeichnet, daß die Eintauchtiefe der Blätter zwischen $D' - D/3$ und $D' - D$ liegt.

# Fig. 2

# Fig. 1

Fig.3

0 050 532